# EUROPEAN PATENT SPECIFICATION

(11) **EP 1 119 456 B1**
(45) Date of publication and mention of the grant of the patent: **16.04.2003**
(21) Application number: 99947655.9
(22) Date of filing: 08.10.1999
(51) Int. Cl.: B32B 27/08, C08J 7/04

(54) **COMPOSITE MATERIAL**
VERBUNDWERKSTOFF
MATERIAU COMPOSITE

(30) Priority: 09.10.1998 GB 9822018
(43) Date of publication of application: 01.08.2001
(73) Proprietor: Lucite International UK Limited, Southampton, Hampshire SO14 3BP (GB)
(72) Inventor: WILFORD-BROWN, Jacquin Hilary, Northallerton, North Yorkshire DL6 2LA (GB); LARDER, Alan Paul, Redcar, Cleveland TS10 3LN (GB)
(74) Representative: Brierley, Anthony Paul
(86) International application number: GB9903148
(87) International publication number: WO00021751

(56) References cited:
- EP-A- 0 458 520
- DE-A- 2 703 078

## Description

The present invention relates to thermoplastic composite materials especially materials having a layer of acrylic resin.

Composite materials having a layered structure including a layer of an acrylic polymer are known and useful in many applications. For example, articles such as bathtubs and other sanitaryware are often made from an acrylic upper or shell layer which is bonded to a reinforcing substrate layer. The reinforcement has conventionally been of fibre-reinforced thermoplastic or thermosetting resin applied by spraying onto the bottom surface of an acrylic shell. There has recently been a desire to eliminate such reinforcing processes. which may be costly and messy to apply, in favour of using laminates of acrylic polymer with another thermoplastic material. Examples of such laminates and processes for making them are given in EP-A-0781201 and EP-A-0225500 which describe a composite plate for drawing into a bathtub shape which has an acrylic layer arranged upon a layer of an acrylonitrile-butadiene-styrene (ABS) thermoplastic material, the composite being formed by coextrusion. EP-A-0647177 describes the application of a thermosetting polyester material to the rear face of an acrylic bathtub by injection moulding techniques. EP-A-0495026 describes a continuous lamination process for forming a laminate of an acrylic polymeric layer to an ABS substrate. EP-A-0454520 describes a further method for providing a laminate of acrylic and ABS for thermoforming applications by calendering sheets of polymethyl methacrylate with molten ABS.

DE 2 703 078 relates to a bonding adhesive for bonding polyolefin and polystyrene panels.The bonding adhesive comprises (a) 50 to 90% wt of an ethylene-acrylic acid C₁ to C₈ alkyl ester copolymer containing 2 to 50% wt of the acrylic acid alkyl ester and 50 to 98% wt of ethylene; and, (b) 10 to 50% wt of a syrene polymer.

From the above references, acrylic bathtubs are known to be reinforced by a layer of ABS material. Acrylic materials are compatible with and adhere well to ABS so that such laminates may be formed by a variety of methods. However, ABS is a relatively expensive material compared to the readily available polystyrene thermoplastic polymers. High impact polystyrene (HIPS) is a suitable substrate material for many applications in which acrylic sheet is used and it is often considerably cheaper than ABS. One problem with the use of HIPS as a substrate for acrylics is the difficulty of adhering acrylic polymers to HIPS. This problem is described in EP-A-0458520 which describes a multi-layered structure and suggests the use of an ABS layer to bond an acrylic layer to a HIPS substrate.

It is an object of the present invention to provide a composite material which overcomes at least some of the problems with the prior art.

According to the invention, a composite material comprises a first layer and a second layer, said layers being bonded together, wherein said first layer comprises 40 - 95% by weight of an acrylic polymer formed from a monomer comprising 60 - 100% methyl methacrylate and 0 - 40% of a vinylic comonomer and 5 - 60% of a styrenic polymer wherein at least 10 % of the monomer residues are (optionally substituted) styrene and said second layer comprises a thermoplastic polymer.

The composite is useful for forming articles such as shower trays, washbasins, bathtubs, panelling and similar articles e.g. by thermoforming.

Composites having the first layer formed from the composition described above exhibit improved inter-layer bonding, especially when the second layer is a HIPS material. Therefore in a preferred composite material the second layer comprises HIPS.

According to a second aspect of the invention we provide a process for the manufacture of a composite layered material comprising the steps of:
(i) forming a first layer comprising 40 - 95% by weight of an acrylic polymer formed from a monomer comprising 60 - 100% methyl methacrylate and 0 - 40% of a vinylic comonomer and 5 - 60% of a copolymer wherein at least 10 % of the monomer residues are (optionally substituted) styrene;
(ii) forming a second layer of a thermoplastic material;
(iii) bonding together said first and second layers to form a layered composite material.

The first and second layers may be bonded together by any suitable method, e.g. extrusion-coating, by coextrusion of the two layers or by laminating, e.g. by passing heated layers together through a nip roller. The first acrylic layer may be formed by a casting process wherein a syrup comprising acrylic polymer or copolymer dissolved in a monomer or mixture of monomers with initiator and optionally other additives is poured into a space between two constraining surfaces separated by a gasket or similar spacing device and then heated to cause the syrup to polymerise, usually to form a high molecular weight polymer sheet. Cast acrylic processes may be either batch or continuous. If the first acrylic layer is formed by casting then the cast acrylic sheet may be laminated to the thermoplastic substrate. Alternatively the first acrylic layer may be formed by casting directly onto a preformed thermoplastic second layer substrate.

A particularly convenient method of forming the composite is by coextrusion. According to a third aspect of the invention we therefore provide a process for the manufacture of a composite layered material comprising the steps of:
(i) forming a first molten polymer stream comprising 40 - 95% by weight of an acrylic polymer formed from a monomer comprising 60 - 100% methyl methacrylate and 0 - 40% of a vinylic comonomer and 5 - 60% of a copolymer wherein at least 10 % of the monomer residues are (optionally substituted) styrene;
(ii) forming a second molten polymer stream of a thermoplastic substrate material;
(iii) coextruding said first and second polymer streams by means of a coextrusion apparatus to form a layered composite material.

Particularly when the composite material is formed by coextrusion, one or both layers may contain a proportion of material of which the other layer is formed, e.g. by incorporating edge-trims or other off-cuts or reworked material from the coextruded material into the feed.

It is highly desirable to provide an acrylic material for coextrusion onto a substrate which has similar rheological properties at the extrusion temperature to those of the substrate material. Therefore one preferred form of the first layer acrylic material has a rheology, e.g. melt flow index (MFI) which is similar to HIPS grades for extrusion.

The composite may vary between 0.1 - 50 mm in thickness, preferably 1 - 20 mm. The acrylic layer preferably comprises 1 - 40%, preferably 5 - 20% of the total thickness of the composite.
The composite material may comprise more than two layers. For example the composite may comprise a thermoplastic second layer having an acrylic material bonded to each side of it.

The acrylic first layer material comprises 40 - 95% by weight of an acrylic polymer formed from a monomer comprising 60 - 100% methyl methacrylate and 0 - 40% of a vinylic comonomer. Preferred comonomers include C₁₋₁₀ alkyl acrylate or C₁₋₁₀ alkyl (C₁₋₆-alk)acrylate, optionally having a functional group, e.g. hydroxy ethyl methacrylate, isobornyl methacrylate; styrene and other vinyl aromatics, polyfunctional monomers such as ethylene glycol dimethacrylate. The acrylic may comprise a copolymer of methyl methacrylate and an alkyl acrylate or alkacrylate. Preferred comonomers include methyl acrylate, ethyl acrylate and butyl acrylate.

The acrylic material may also contain other additives commonly used in acrylic formulations such as chain transfer agents, (e.g. various mercaptans), stabilisers, lubricating agents, fire retardents, colourants, initiator residues, residues of chain-transfer compounds, cross-linking agents, fillers, release agents, impact modifiers, UV absorbing compounds etc.

The acrylic first layer material contains 5 - 60%, preferably 15 - 40%, especially at least 25% by weight of a styrene-containing polymer wherein at least 10 % of the monomer residues are (optionally substituted) styrene. Suitable styrene-containing polymers include methyl methacrylate- butadiene - styrene copolymer (MBS), styrene - maleic anhydride copolymer, styrene - butadiene rubbers such as the Cariflex ™ polymers supplied by Shell, styrene - olefin copolymers such as styrene ethylene-butylene styrene (optionally containing succinic anhydride) , styrene - ethylene - propylene, e.g. the polymers sold under the Kraton trademark and thermoplastic polymers such as styrene-acrylonitrile (SAN) copolymers, including optionally terpolymers with acrylate comonomers (ASA copolymers), and blends of such polymers with other materials, e.g. SAN blends with EPDM rubber sold as ROYALTUF. Preferred styrene copolymers include MBS, styrene - maleic anhydride copolymer, styrene - butadiene rubbers, styrene - olefin copolymers and core-shell particles containing a suitable proportion on styrene residues. Particularly preferred are MBS polymers.

The acrylic first layer may additionally contain up to 60% by weight (based on total weight of the layer material) of a particulate impact modifier such as a core-shell type impact modifier. Core-shell impact modifiers are known in the art and normally comprise a hard core, e.g. of (optionally cross-linked) polymethyl methacrylate, a rubbery shell of relatively low Tg polymer, e.g. a styrene/alkyl acrylate copolymer and optionally further shells of an acrylate and/or a methacrylate polymer or copolymer. Such particles are usually made by emulsion polymerisation techniques and may contain additional components, such as functional comonomers to promote grafting between the core and shell(s). The foregoing describes one common general type of core-shell impact modifying particle but other types are also known and used, e.g. having a relatively soft core and harder shell or containing different comonomers in various proportions. A suitable core-shell particle is described in WO96/37531.

The acrylic polymer and styrene polymer forming the first layer material may be combined by blending, e.g. melt blending. This may be achieved by mixing together particles of each polymer in the feed of a moulding apparatus, e.g. extruder and then processing into a compounded pellet for subsequent moulding of the first layer of the composite material or the materials may be dry-blended, e.g. by tumbling and then melted and shaped directly into the first layer of the composite. Other methods of blending together the polymers are also envisaged, e.g. dissolving one polymer in a solution of the other or in a monomer or pre-polymer mixture which is a precursor to the other polymer. For example the styrene-containing polymer may be dissolved or otherwise dispersed in methyl methacrylate or in a solution of polymethylmethacrylate in methyl methacrylate, optionally containing other comonomers or copolymers from which the first layer material may be formed by initiating the mixture e.g. by adding an azo or peroxide initiator, casting the solution in a mould or on a continuous belt and then maintaining the mixture at a suitable temperature to polymerise the acrylic monomer to form a cured material.

The substrate material is selected according to the application and may include a range of commonly used commercial thermoplastics e.g. polyolefins, e.g. polypropylene, ABS, PVC, other acylic polymers, MBS etc, however the process of the present invention is particularly suitable for producing a composite material of the acrylic first layer in contact with a high impact polystyrene (HIPS) substrate by coextrusion methods because the incorporation of the styrenic polymer into the acrylic of the first layer greatly improves the adhesion between the layers, whereas previously acrylic materials did not adhere well to HIPS substrate polymers. The styrene polymer is therefore useful as an adhesion promoter for the acrylic material.

Therefore in a fourth aspect of the invention we provide a method of forming a composite material comprising coextruding together an acrylic material with a high impact polystyrene material characterised in that the acrylic material consists of
a) 50 - 100% by weight of a polymer blend comprising:
   (i) 40 - 95% by weight of an acrylic polymer formed from a monomer comprising 60 - 100% methyl methacrylate and 0 - 40% of a vinylic comonomer and
   (ii) 5 - 60% of a styrene copolymer wherein at least 10 % of the monomer residues are (optionally substituted) styrene;
b) 0 - 50% of one or more additives selected from stabilisers, lubricating agents, fire retardents, colourants, initiator residues, residues of chain-transfer compounds, cross-linking agents, fillers, release agents, impact modifiers, UV absorbing compounds, in the absence of biocidal compounds.

The composite articles of the invention and which may be formed by the methods of the invention may be beneficially used to manufacture sanitary articles, such as shower trays, bathtubs etc, building components such as walls, doors, floors etc, parts for vehicles, household appliances and other articles in a wide variety of end-uses.

The invention will be further described in the following examples.

### Example 1

An acrylic polymer comprising 86% methyl methacrylate + 14% ethyl acrylate copolymer (Polymer 1), having a molecular weight of about 90,000 g (Daltons) and melt flow index (MFI) of 27 g/10 mins was compounded together with 35% w/w of MBS (Kane-Ace B56) and extruded into pellets. The resulting material had an MFI of 2 g/10 minutes, measured at 230 °C with a 3.8 kg weight according to the standard test described in ASTM D 1238. The acrylic compound was then coextruded with HIPS (BP4230 available from BP) which has a MFI of 23.7 g/10 mins at 230 °C. The total thickness of the composite was 1.02 mm; the acrylic layer being 0.13 mm thick. The adhesion between the layers was moderate - good.

The adhesion was also estimated using a single asperity scratch apparatus in which the samples were scratched in the direction of extrusion using a 35° (apical angle) tungsten carbide stylus and a traverse rate of 100 mm/min. Scratches were generated at single loads. A scratch was generated with a normal force of 5N and checked for visual evidence of delamination. Further scratches were generated at 1N increments of normal force until delamination was observed. Delamination was said to have occurred when the delamination was continuous, or very nearly continuous around the scratch. All experiments were carried out at 23°C and 50% relative humidity. Samples were kept in the laboratory environment for 24 hours prior to testing. The results are shown in the table.

### Example 2

Polymer 1 was compounded with 5% styrene - maleic anhydride copolymer (Stapron S obtained from DSM). The resulting acrylic compound was coextruded onto HIPS and the resulting adhesion was moderate.

### Example 3

Polymer 1 was compounded with 5% styrene - maleic anhydride copolymer and an additional 35% w/w of MBS. The resulting acrylic compound was coextruded onto HIPS and the resulting adhesion was moderate.

### Example 4

Polymer 1 was compounded with 8% styrene-butadiene rubber (SBR) (Cariflex™ by Shell) and 20% of a core-shell impact modifier. The resulting mixture had an MFI of 9 g/10 minutes. The resulting acrylic compound was coextruded onto HIPS and the resulting adhesion was moderate - good.

### Example 5

An acrylic copolymer comprising 90% methyl methacrylate + 10% butyl acrylate residues (Polymer 2), having a molecular weight of about 90,000 g (Daltons) was compounded with 35% Kraton™ G1650E manufactured by Shell, which is a linear styrene-ethylene-butylene-styrene polymer. The resulting acrylic compound was coextruded onto HIPS and the resulting adhesion was moderate - good.

### Example 6

Polymer 2 was compounded with 35% Kraton G1701E, which is a linear styrene-ethylene-propylene polymer. The resulting acrylic compound was coextruded onto HIPS and the resulting adhesion was moderate - good.

### Example 7

Polymer 2 was compounded with 35% Kraton FG1901X, which is a linear styrene-ethylene-butylene-styrene polymer containing 1.7% bound succinic anhydride. The resulting acrylic compound was coextruded onto HIPS and the resulting adhesion was moderate - good.

### Example 8

A number of coextruded samples were made by extruding an acrylic capstock formed from Polymer 2 blended with a specified amount of a styrene-containing polymer onto a HIPS substrate and subjected to the scratch test as generally described in Example 1. The coextruded layer was between 100 and 200 mm thick. Table 1 shows the materials used and whether the layers delaminated at each loading tested. The materials shown in the table are:
BP2220: medium impact HIPS, MFI of 40gms/10mins
BP4230: high impact HIPS, MFI of 24gms/10mins
BP5300: super high impact HIPS, MFI of 12gms/10mins
ASA: acrylate-styrene-acrylonitrile (BASF Luran S)
SAN: styrene-acrylonitrile (BASF Luran N)
MBS: methylmethacrylate-butadiene-styrene acrylic copolymer (Kane-Ace) B56
Kraton G 1701: linear styrene-ethylene-propylene (Shell)
SBR: styrene-butadiene-rubber (Shell Cariflex)
Core -shell: methylmethacrylate-butylacrylate / styrene-butylacrylate core shell particle.
Royaltuf: 50% SAN/50%EPDM(ethylene/propylene diene rubber).

A control sample of polymer 2 without any styrenic polymer added, coextruded onto BP 4230 HIPS, showed no delamination at 5 N but delaminated when tested at forces of 8, 9, 10 and 12.5 N.

The results show that incorporation of the styrene-containing copolymer into the acrylic capstock material leads to no delamination of the capstock from the substrate HIPS layer at most loadings tested. The preferred systems do not delaminate even at the highest loading.

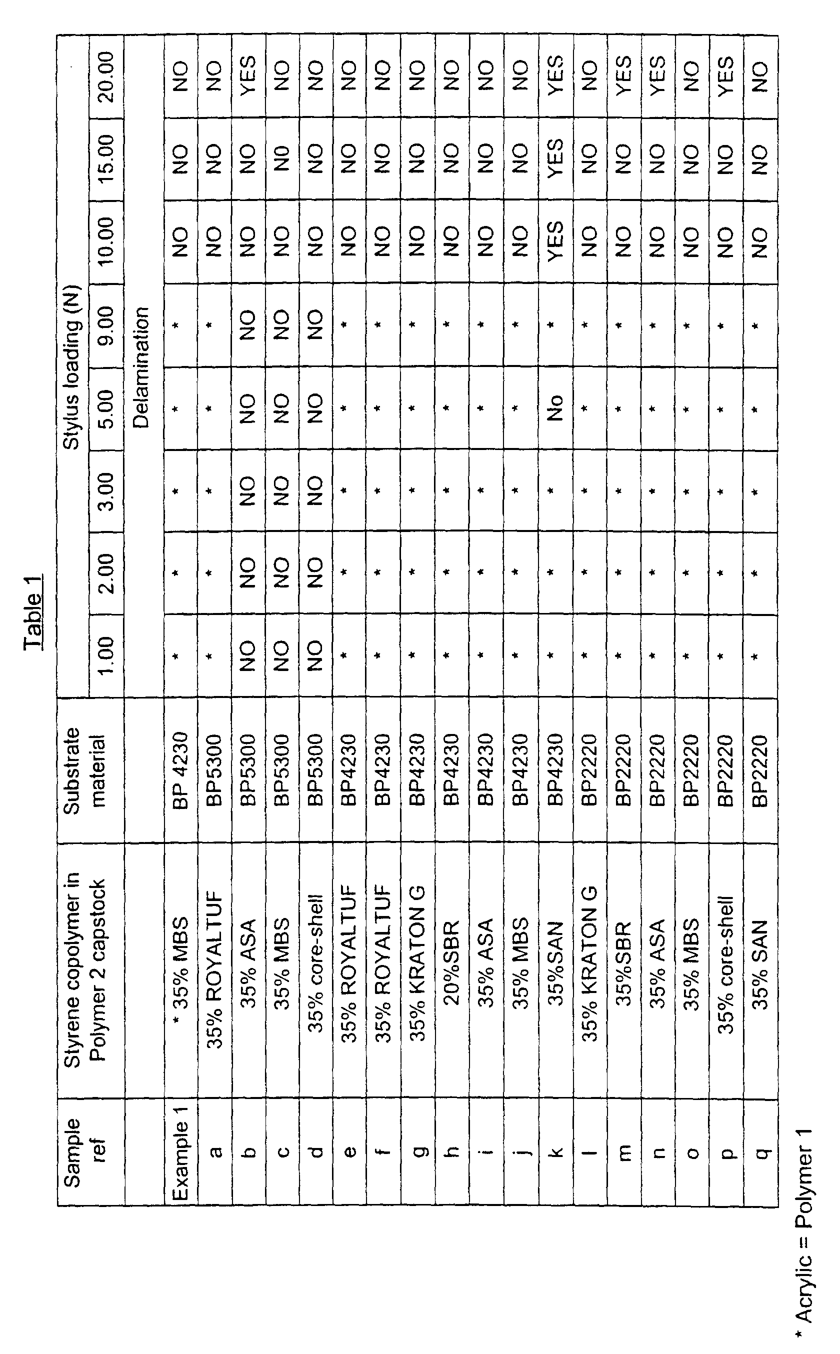

## Claims

1. A composite material comprising a first layer and a second layer, said layers being bonded together, wherein said first layer comprises 40 - 95% by weight of an acrylic polymer formed from a monomer comprising 60 - 100% methyl methacrylate and 0 - 40% of a vinylic comonomer and 5 - 60% of a styrenic polymer wherein at least 10 % of the monomer residues are optionally substituted styrene and said second layer comprises a thermoplastic polymer.

2. A composite material as claimed in claim 1, wherein the second layer comprises high impact polystyrene (HIPS).

3. A composite material as claimed in either claim 1 or claim 2, wherein the acrylic layer comprises 1 - 40% of the total thickness of the composite.

4. A composite material as claimed in any of the preceding claims, wherein the acrylic polymer comprises a copolymer of methyl methacrylate and an alkyl acrylate or alkacrylate.

5. A composite material as claimed in any of the preceding claims, wherein the styrene-containing polymer is selected from the group consisting of methyl methacrylate-butadiene - styrene copolymer, styrene - maleic anhydride copolymer, styrene - butadiene rubbers, styrene - olefin copolymers, styrene-acrylonitrile copolymers and blends with rubbery polymers.

6. A composite material as claimed in any of the preceding claims, wherein the acrylic first layer additionally contains up to 60% by weight based on total weight of the layer material of a particulate impact modifier such as a core-shell type impact modifier.

7. A process for the manufacture of a composite layered material comprising the steps of:
(i) forming a first layer comprising 40 - 95% by weight of an acrylic polymer formed from a monomer comprising 60 - 100% methyl methacrylate and 0 - 40% of a vinylic comonomer and 5 - 60% of a styrenic polymer wherein at least 10 % of the monomer residues are optionally substituted styrene;
(ii) forming a second layer of a thermoplastic material;
(iii) bonding together said first and second layers to form a layered, composite material.

8. A process as claimed in claim 7, wherein the first and second layers are bonded together by extrusion-coating, by coextrusion of the two layers or by laminating.

9. A process as claimed in claim 7, wherein the first acrylic layer is formed by a casting process wherein a syrup comprising acrylic polymer or copolymer and the styrene-containing copolymer dispersed or dissolved in a monomer or mixture of monomers with initiator and optionally other additives is poured into a space between two constraining surfaces separated by a gasket or similar spacing device and then heated to cause the syrup to polymerise to form a cast acrylic sheet.

10. A process as claimed in claim 9, wherein the cast acrylic sheet is subsequently laminated to the thermoplastic substrate.

11. A process as claimed in claim 9, wherein the first acrylic layer is formed by casting the acrylic syrup directly onto a preformed thermoplastic second layer substrate.

12. A process as claimed in claim 7, wherein the styrene-containing material is added to the acrylic polymer to form the first layer material by blending and then the first layer is subsequently formed by extrusion.

13. A process as claimed in any preceding claim wherein said second layer comprises high impact polystyrene (HIPS).

14. A method of forming a composite material comprising coextruding together an acrylic material with a high impact polystyrene material **characterised in that** the acrylic material consists of
a) 50 - 100% by weight of a polymer blend comprising:
(i) 40 - 95% by weight of an acrylic polymer formed from a monomer comprising 60 - 100% methyl methacrylate and 0 - 40% of a vinylic comonomer and
(ii) 5 - 60% of a styrene copolymer wherein at least 10 % of the monomer residues are optionally substituted styrene;
b) 0 - 50% of one or more additional compounds selected from stabilisers, lubricating agents, fire retardents, colourants, initiator residues, residues of chain-transfer compounds, cross-linking agents, fillers, release agents, impact modifiers, UV absorbing compounds.

15. Use of a styrenic polymer selected from the group consisting of methyl methacrylate-butadiene - styrene copolymer, styrene - maleic anhydride copolymer, styrene - butadiene rubbers, styrene - olefin copolymers, styrene-acrylonitrile copolymers and blends with rubbery polymers as an additive to an acrylic polymer formed from a monomer mixture comprising 60- 100% methyl methacrylate and 0 - 40% of a vinylic comonomer to promote adhesion between the acrylic material and high impact polystyrene, said styrenic polymer being present at a level in the range 10 - 50 % by weight of the total weight of styrenic polymer and acrylic polymer.

## Patentansprüche

1. Verbundmaterial mit einer ersten Schicht und einer zweiten Schicht, wobei die Schichten miteinander verbunden sind, bei dem die erste Schicht 40-95 Gew.-% eines aus einem 60-100% Methylmethacrylat und 0-40% eines Vinylcomonomers enthaltenden Monomer hergestellten Acrylpolymers und 5-60% eines Styrolpolymers, in dem es sich bei mindestens 10% der Monomerreste um gegebenenfalls substituiertes Styrol handelt, enthält und die zweite Schicht zumindest teilweise aus einem thermoplastischen Polymer besteht.

2. Verbundmaterial nach Anspruch 1, bei dem die zweite Schicht schlagzähes Polystyrol (HIPS) enthält.

3. Verbundmaterial nach Anspruch 1 oder 2, bei dem die Acrylschicht 1-40% der Gesamtdicke des Verbunds ausmacht.

4. Verbundmaterial nach einem der vorhergehenden Ansprüche, bei dem das Acrylpolymer ein Copolymer von Methylmethacrylat und einem Alkylacrylat oder -alkacrylat enthält.

5. Verbundmaterial nach einem der vorhergehenden Ansprüche, bei dem das styrolhaltige Polymer aus der Gruppe bestehend aus Methylmethacrylat-Butadien-Styrol-Copolymer, Styrol-Maleinsäureanhydrid-Copolymer, Styrol-Butadien-Kautschuken, Styrol-Olefin-Copolymeren, Styrol-Acrylnitril-Copolymeren und Mischungen mit kautschukartigen Polymeren stammt.

6. Verbundmaterial nach einem der vorhergehenden Ansprüche, bei dem die erste Acrylschicht außerdem auch noch bis zu 60 Gew.-%, bezogen auf das Gesamtgewicht des Schichtmaterials, eines teilchenförmigen Schlagzähigkeitsverbesserers, wie eines Schlagzähigkeitsverbesserers vom Kern-Schale-Typ, enthält.

7. Verfahren zur Herstellung eines Schichtverbundmaterials, bei dem man:
(i) eine erste Schicht, die 40-95 Gew.-% eines aus einem 60-100% Methylmethacrylat und 0-40% eines Vinylcomonomers enthaltenden Monomer hergestellten Acrylpolymers und 5-60% eines Styrolpolymers, in dem es sich bei mindestens 10% der Monomerreste um gegebenenfalls substituiertes Styrol handelt, enthält, herstellt;
(ii) eine zweite Schicht aus einem thermoplastischen Material herstellt und
(iii) die erste und die zweite Schicht zu einem Schichtverbundmaterial verbindet.

8. Verfahren nach Anspruch 7, bei dem man die Verbindung der ersten und der zweiten Schicht durch Extrusionsbeschichten, durch Coextrudieren der beiden Schichten oder durch Laminieren durchführt.

9. Verfahren nach Anspruch 7, bei dem man die erste Acrylschicht nach einem Gießverfahren herstellt, bei dem man einen Acrylpolymer oder copolymer und das styrolhaltige Copolymer in Dispersion oder Lösung in einem Monomer oder Monomerengemisch mit Initiator und gegebenenfalls anderen Additiven enthaltenden Sirup in einen Raum zwischen zwei durch eine Dichtung oder eine ähnliche Beabstandungsvorrichtung beabstandete Begrenzungsflächen gießt und dann erhitzt, wodurch der Sirup zu einer Acrylgießfolie polymerisiert.

10. Verfahren nach Anspruch 9, bei dem man die Acrylgießfolie anschließend auf das thermoplastische Substrat laminiert.

11. Verfahren nach Anspruch 9, bei dem man die erste Acrylschicht herstellt, indem man den Acrylsirup direkt auf ein vorgeformtes thermoplastisches Zweitschichtsubstrat gießt.

12. Verfahren nach Anspruch 7, bei dem der Zusatz des styrolhaltigen Materials zu dem Acrylpolymer zur Herstellung des Materials für die erste Schicht durch Mischen erfolgt und anschließend die erste Schicht durch Extrusion hergestellt wird.

13. Verfahren nach einem der vorhergehenden Ansprüche, bei dem die zweite Schicht schlagzähes Polystyrol (HIPS) enthält.

14. Verfahren zur Herstellung eines Verbundmaterials, bei dem man ein Acrylmaterial mit einem schlagzähen Polystyrolmaterial coextrudiert, **dadurch gekennzeichnet, daß** das Acrylmaterial aus
a) 50-100 Gew.-% einer Polymermischung, enthaltend:
(i) 40-95 Gew.-% eines aus einem 60-100% Methylmethacrylat und 0-40% eines Vinylcomonomers enthaltenden Monomer hergestellten Acrylpolymers und
(ii) 5-60% eines Styrolcopolymers, in dem es sich bei mindestens 10% der Monomerreste um gegebenenfalls substituiertes Styrol handelt;
b) 0-50% einer oder mehrerer zusätzlicher Verbindungen, die unter Stabilisatoren, Gleitmitteln, Flammschutzmitteln, Farbmitteln, Initiatorresten, Kettenüberträgerresten, Vernetzern, Füllstoffen, Trennmitteln, Schlagzähigkeitsverbesserern und UV-ABsorbern ausgewählt sind;
besteht.

15. Verwendung eines Styrolpolymers aus der Gruppe bestehend aus Methylmethacrylat-Butadien-Styrol-Copolymer, Styrol-Maleinsäureanhydrid-Copolymer, Styrol-Butadien-Kautschuken, Styrol-Olefin-Copolymeren, Styrol-Acrylnitril-Copolymeren und Mischungen mit kautschukartigen Polymeren als Additiv für ein aus einer 60-100% Methylmethacrylat und 0-40% eines Vinylcomonomers enthaltenden Monomerenmischung hergestellten Acrylpolymers zur Verbesserung der Haftung zwischen dem Acrylmaterial und schlagzähem Polystyrol, wobei das Styrolpolymer in einem Anteil im Bereich von 10-50 Gew.-%, bezogen auf das Gesamtgewicht von Styrolpolymer und Acrylpolymer, vorliegt.

## Revendications

1. Matériau composite comprenant une première couche et une deuxième couche, lesdites couches étant collées l'une à l'autre, où ladite première couche comprend de 40 à 95 % en poids d'un polymère acrylique formé à partir d'un monomère comprenant de 60 à 100 % de méthacrylate de méthyle et de 0 à 40 % d'un comonomère vinylique, et de 5 à 60 % d'un polymère styrénique où au moins 10 % des résidus monomères sont du styrène éventuellement substitué, et ladite deuxième couche comprend un polymère thermoplastique.

2. Matériau composite selon la revendication 1, dans lequel la deuxième couche comprend du polystyrène choc (HIPS).

3. Matériau composite selon l'une ou l'autre des revendications 1 ou 2, dans lequel la couche acrylique constitue de 1 à 40 % de l'épaisseur totale du composite.

4. Matériau composite selon l'une quelconque des revendications précédentes, dans lequel le polymère acrylique comprend un copolymère de méthacrylate de méthyle et d'un acrylate ou alkacrylate d'alkyle.

5. Matériau composite selon l'une quelconque des revendications précédentes, dans lequel le polymère renfermant du styrène est choisi parmi le groupe constitué d'un copolymère méthacrylate de méthyle/butadiène/styrène, d'un copolymère styrène/anhydride maléique, de caoutchoucs styrène/butadiène, de copolymères styrène/oléfine, de copolymères styrène/acrylonitrile et de mélanges avec des polymères-caoutchoucs.

6. Matériau composite selon l'une quelconque des revendications précédentes, dans lequel la première couche acrylique contient en outre jusqu'à 60 % en poids, par rapport au poids total du matériau de couche, d'un modificateur d'impact particulaire tel qu'un modificateur d'impact du type coeur-coquille.

7. Procédé de fabrication d'un matériau composite stratifié comprenant les étapes consistant à :
(i) former une première couche comprenant de 40 à 95 % en poids d'un polymère acrylique formé à partir d'un monomère comprenant de 60 à 100 % de méthacrylate de méthyle et de 0 à 40 % d'un comonomère vinylique, et de 5 à 60 % d'un polymère styrénique où au moins 10 % des résidus monomères sont du styrène éventuellement substitué ;
(ii) former une deuxième couche d'un matériau thermoplastique
(iii) coller lesdites première et deuxième couches l'une à l'autre en vue de former un matériau composite stratifié.

8. Composé selon la revendication 7, dans lequel les première et deuxième couches sont collées l'une à l'autre par revêtement par extrusion, par co-extrusion des deux couches ou par stratification.

9. Composé selon la revendication 7, dans lequel la première couche acrylique est formée par un procédé de coulage dans lequel un sirop comprenant un polymère ou copolymère acrylique et le copolymère renfermant du styrène dispersés ou dissous dans un monomère ou un mélange de monomères avec un amorceur et éventuellement d'autres additifs, est versé dans un espace entre deux surfaces de resserrement séparées par un joint d'étanchéité ou un dispositif d'espacement similaire et ensuite chauffé pour entraîner la polymérisation du sirop en vue de former une feuille acrylique coulée.

10. Procédé selon la revendication 9, dans lequel la feuille acrylique coulée est ensuite stratifiée sur le substrat thermoplastique.

11. Procédé selon la revendication 9, dans lequel la première couche acrylique est formée en coulant le sirop acrylique directement sur un deuxième substrat de couche thermoplastique préformé.

12. Procédé selon la revendication 7, dans lequel le matériau renfermant du styrène est ajouté au polymère acrylique en vue de former le premier matériau de couche par homogénéisation, puis la première couche est ensuite formée par extrusion.

13. Procédé selon l'une quelconque des revendications précédentes, dans lequel ladite deuxième couche comprend du polystyrène choc (HIPS).

14. Méthode de formation d'un matériau composite comprenant la co-extrusion conjointe d'un matériau acrylique avec un matériau polystyrène choc, **caractérisée en ce que** le matériau acrylique est constitué
(a) de 50 à 100 % en poids d'un mélange polymère comprenant :
(i) de 40 à 95 % en poids d'un polymère acrylique formé à partir d'un monomère comprenant de 60 à 100 % de méthacrylate de méthyle et de 0 à 40 % d'un comonomère vinylique et
(ii) de 5 à 60 % d'un copolymère de styrène où au moins 10 % des résidus monomères sont du styrène éventuellement substitué ;
(b) de 0 à 50 % d'un ou de plusieurs composés supplémentaires choisis parmi des stabilisants, des lubrifiants, des agents ignifugeants, des colorants, des résidus d'amorceur, des résidus de composés de transfert de chaîne, des agents de réticulation, des charges, des agents de démoulage, des modificateurs d'impact, des composés absorbant les UV.

15. Utilisation d'un polymère styrénique choisi parmi le groupe constitué d'un copolymère méthacrylate de méthyle/butadiène/styrène, d'un copolymère styrène/anhydride maléique, de caoutchoucs styrène/butadiène, de copolymères styrène/oléfine, de copolymères styrène/acrylonitrile et de mélanges avec des polymères caoutchoucs en tant qu'additif pour un polymère acrylique formé à partir d'un mélange de monomères comprenant de 60 à 100 % de méthacrylate de méthyle et de 0 à 40 % d'un comonomère vinylique, en vue de favoriser l'adhésion entre le matériau acrylique et le polystyrène choc, ledit polymère styrénique étant présent à un taux dans la plage de 10 à 50 % en poids du poids total de polymère styrénique et de polymère acrylique.
